Europäisches Patentamt

European Patent Office

Office européen des brevets

(19)

(11) Veröffentlichungsnummer : **0 086 436**
**B1**

# (12) EUROPÄISCHE PATENTSCHRIFT

(45) Veröffentlichungstag der Patentschrift :
19.12.84

(21) Anmeldenummer : 83101159.8

(22) Anmeldetag : 07.02.83

(51) Int. Cl.³ : **B 01 D 53/04**

(54) **Verfahren zum Betrieb einer zyklisch arbeitenden Druckwechsel-Adsorptionsanlage.**

(30) Priorität : 16.02.82 DE 3205505

(43) Veröffentlichungstag der Anmeldung :
24.08.83 Patentblatt 83/34

(45) Bekanntmachung des Hinweises auf die Patenterteilung : 19.12.84 Patentblatt 84/51

(84) Benannte Vertragsstaaten :
AT BE CH DE FR GB IT LI NL

(56) Entgegenhaltungen :
DE-A- 2 851 847

(73) Patentinhaber : **Linde Aktiengesellschaft**
**Abraham-Lincoln-Strasse 21**
**D-6200 Wiesbaden (DE)**

(72) Erfinder : **Asztalos, Stefan, Dipl.-Ing.**
**Noestrasse 20**
**D-8000 München 71 (DE)**

(74) Vertreter : **Schaefer, Gerhard, Dr.**
**Linde Aktiengesellschaft Zentrale Patentabteilung**
**D-8023 Höllriegelskreuth (DE)**

EP 0 086 436 B1

**0 086 436**

## Beschreibung

Die Erfindung betrifft ein Verfahren zum Betrieb einer zyklisch arbeitenden Druckwechsel-Adsorptionsanlage zur Reinigung und Zerlegung von Gasen mit mehreren Adsorbern, von denen jeder innerhalb eines Zyklus eine vorher festgelegte Anzahl von Adsorptions-, Entspannungs- bzw. Druckausgleichs-, Spül- und Wiederaufdrücktakten durchläuft, wobei für die Adsorber, die Rohrleitungen und/oder die Ventile der Druckwechsel-Adsorptionsanlage meßbare physikalische Größen ausgewählt und laufend gemessen werden und wobei das Auftreten von Differenzen zwischen Ist- und Sollwerten dieser Größen als Indiz für einen Defekt in der Adsorptionsanlage gewertet und die Adsorptionsanlage nach Abblockung der als Defekt ermittelten Apparateteile mit einer verminderten Anzahl von Adsorbern weiter betrieben wird.

Ein derartiges Verfahren ist aus der DE-A-28 51 847 bekannt. Bei großen, in der Industrie zur Gaszerlegung bzw. -reinigung eingesetzten Adsorptionsanlagen ist es wirtschaftlich nicht vertretbar, beim Auftreten von Defekten an Ventilen, Rohrleitungen oder Adsorbern die gesamte Anlage stillzulegen. Das bekannte Verfahren schafft hiergegen bereits eine wirksame Abhilfe durch eine Systematisierung der Fehlersuche und Angabe einer Verfahrensweise, wie eine derartige Anlage bei Ausfall eines oder mehrerer Adsorber mit den verbleibenden Adsorbern weiterbetrieben werden kann.

Die Praxis hat jedoch gezeigt, daß die bei dem bekannten Verfahren angewandte Fehlerermittlung und sich daran anschließende Abblockung defekter Apparateteile zwar im Prinzip zuverlässig arbeitet, jedoch dazu führt, daß bestimmte Apparateteile öfter als tatsächlich notwendig abgeschaltet werden. Der Grund hierfür liegt darin, daß bei dem bekannten Verfahren der Abblockmechanismus schon in Aktion tritt, wenn eine einzige physikalische Größe Differenzen zwischen den gemessenen Istwerten und den Sollwerten zeigt. Oft treten aber derartige Abweichungen zeitlich nur begrenzt auf und verschwinden dann von selbst wieder, so daß in vielen Fällen die Umschaltung auf ein Schema mit einer verringerten Anzahl von Adsorbern überflüssig ist.

Zwar ist die Abblockung einzelner Adsorber nicht so gravierend wie die Abschaltung der gesamten Adsorptionsanlage, wie es früher notwendig war, doch erfordert eine Verminderung der Anzahl der Adsorber einer solchen Anlage entweder eine Verminderung der Rohgaszufuhr oder einen Betrieb bei erhöhtem Druck, um die gleiche Menge Rohgas durchzusetzen. Ersteres führt unmittelbar zu einer Senkung des Produktausstoßes, letzteres beeinflußt die empfindlichen Druckausgleichsgleichgewichte in der Anlage, beides Fakten, die sich beim Betrieb störend auswirken.

Es ist die Aufgabe der vorliegenden Erfindung, ein Verfahren zum Betrieb einer Druckwechsel-Adsorptionsanlage zu schaffen, das hiergegen Abhilfe schafft, eine Umsteuerung der Anlage nur bei tatsächlich vorliegenden bleibenden Defekten indiziert und die Umsteuerung in kürzester Zeit vollzieht.

Diese Aufgabe wird erfindungsgemäß dadurch gelöst, daß beim Auftreten einer Differenz zwischen Soll- und Istwerten einer dieser Größen das Auftreten einer Differenz zwischen Soll- und Istwerten mindestens einer anderen, dem gleichen Anlagenteil zugeordneten Größe abgewartet wird und daß dann erst die dadurch als defekt ermittelten Apparateteile abgeblockt werden und die Adsorptionsanlage mit einer verminderten Anzahl von Adsorbern weiterbetrieben wird.

Durch das erfindungsgemäße Verfahren wird zunächst zuverlässig vermieden, daß einzelne Adsorber im Falle von kurzfristigen oder nicht schwerwiegenden Störungen, z. B. durch eine mechanische Hysterese der Schaltventile oder durch Ungenauigkeiten oder Störungen an Ventilstellungsmeldern und Drucktransmittern, abgeschaltet werden. Im Gegensatz zum bekannten Verfahren führt also beim erfindungsgemäßen Verfahren das Auftreten nur eines Störungsmerkmales nicht dazu, daß der betreffende Adsorber aus dem Betrieb genommen wird. Vielmehr wird dieses Störungsmerkmal nur angezeigt. Erfindungsgemäß ist vorgesehen, daß nach einer solchen Anzeige, z. B. wenn ein vorgegebener Druck in einer bestimmten Zeit an einer bestimmten Stelle der Anlage nicht erreicht wird, zunächst eine Untersuchung durch Überprüfung der Anlagensignale (Ventilstellungsmelder, Adsorberdrücke) eingeleitet wird. Durch diese Untersuchung wird festgestellt, ob die Störung signifikant und bleibend ist (z. B. bei Störung eines Ventils) oder ob nur ein Fehler vorliegt, der durch eine geringfügige Verlängerung der Taktzeit behoben werden kann. Im letzteren Fall erfolgt die Weiterschaltung der Adsorptionsanlage durch das Schaltwerk auf den nächsten Takt mit unveränderter Adsorberzahl.

Als geeignete physikalische Größe, die laufend verfolgt wird, hat sich bei Druckwechseladsorptionsanlagen der Druck in den Adsorbern oder Leitungen erwiesen. Auf welche Art der Druck gemessen wird, ober ob ein absoluter Druck oder eine Druckänderung oder ein Druckverlauf hierfür zweckmäßig gemessen wird, hängt davon ab, welche Art Druckwechselverfahren durchgeführt wird, welche technischen Hilfs- und Überwachungsmittel zur Verfügung stehen, welche Druckdifferenzen zwischen Adsorption und Desorption herrschen usw. Es ist z. B. möglich, eine vorbestimmte Druckänderung durch eine automatische Regelung der Ventile innerhalb einer bestimmten Zeit zu bewerkstelligen. Dann kann beispielsweise als physikalische Größe, die es zu überwachen gilt, die Ventilstellung bei einem bestimmten Zeitpunkt während der Druckänderung gewählt werden.

Man kann Druckwechseladsorptionsanlagen so fahren, daß die einzelnen Schalttakte, d. h. Ventilumstellungen, nicht nach einem Zeitplan, sondern nach einem Druckplan erfolgen, d. h. die Ventile schalten um, wenn der Druck in bestimmten Teilen der Anlage, beispielsweise in den Adsorbern oder in den Verbindungsleitungen, einen bestimmten, vorher festgelegten Wert erreicht hat. Bei einer vorgege-

2

0 086 436

benen Ventilkennlinie besteht dann die Möglichkeit, die Zeit, die bis zum Umschalten verfließt, zu messen und Abweichungen von den Sollwerten als Indizien für defekte Ventile heranzuziehen.

Die am weitesten verbreitete Art, Druckwechsel-Adsorptionsanlagen zu fahren, besteht jedoch darin, die Umschaltungen einem vorher genau festgelegten Zeitplan folgen zu lassen. In diesem Fall hat es sich erfindungsgemäß als besonders zweckmäßig erwiesen, die Drücke in den Adsorbern und/oder in den verbindenden Leitungen als physikalische Größe auszuwählen und zur Ermittlung defekter Ventile heranzuziehen.

Nach Ermittlung eines Defektes stellt sich weiterhin bei Adsorptionsanlagen das Problem, den Übergang auf eine verminderte Adsorberzahl möglichst schnell zu vollziehen. Das Problem des Überganges auf die verminderte Adsorberzahl wird bei dem bekannten Verfahren dadurch gelöst, daß die nach der Umschaltung verbleibenden Adsorber zum Teil bis zu vorher festgelegten Takten unter Einhaltung einer vorher festgelegten Taktfolge weiterbetrieben und zum Teil in ihrem Zustand belassen werden. Demzufolge ist eine gewisse Anzahl von Synchronisationstakten erforderlich, bis die Anlage an die verringerte Adsorberzahl angepaßt ist. Dadurch geht, insbesondere wenn wegen eines Defektes mehrere Adsorber abgeblockt werden müssen, durch die bei den einzelnen Umschaltprogrammen nur nacheinander vollziehbaren Synchronisationstakte oft wertvolle Zeit verloren, bis die Anlage wieder funktionsfähig ist.

In Weiterbildung des Erfindungsgedankens wird daher vorgeschlagen, daß die bei der Weiterschaltung auf den nächsten Takt nach dem Abblocken defekter Anlagenteile verbleibenden Adsorbern, soweit sie sich nicht schon auf einem geeigneten Druckniveau befinden, durch Überspringen mehrerer Takte in einem Takt auf geeignete niedrigere oder höhere Druckniveaus gebracht werden. Durch Vermeidung von zwischengeschalteten Synchronisationstakten kann somit erfindungsgemäß in Sekundenschnelle ein Weiterfunktionieren der gesamten Anlage erreicht werden.

Beim erfindungsgemäßen Übergang auf ein neues Taktschema werden die nach dem Abblocken von den verbleibenden Adsorbern zu durchlaufenden Takte in ihrer Funktion so verschoben, daß die ursprüngliche Reihenfolge der Funktionen innerhalb jedes Taktes unter Wegfall einer der Anzahl der abgeschalteten Adsorber entsprechenden Anzahl von Adsorptionstakten wieder hergestellt wird, wobei der oder die jeweils bereits seit längerem in Adsorption befindlichen Adsorber den oder die jeweils bei den relativ höheren Drücken stattfindenden Entspannungstakte übernehmen und der oder die jeweils erst seit kürzerem in Adsorption befindlichen Adsorber in Adsorption verbleiben. Demgemäß wird also vom gestörten Takt das Druckbild ohne den oder die abgeblockten Adsorber herangezogen und ein Druckbild für das Verfahren mit der verringerten Adsorberzahl für verschiedene Schritte gesucht. Dann wird die Anlage in den Schritt überführt, der im Druckverlauf die geringste Abweichung zum bisherigen Druckbild hat. Die Druckbildähnlichkeit des neuen Schemas mit dem bisherigen Schema ist also von äußerster Wichtigkeit für den schnellen Ablauf des Verfahrens. Es ist klar, daß hierfür Rechner benötigt werden, die innerhalb von Mikrosekunden diesen Vergleich anstellen.

Im einzelnen wird nach Ausfall eines Adsorbers immer der Adsorber für den Ersatz der ausgefallenen Funktion herangezogen, der sich im Druckablaufschema vor dem abgeblockten Adsorber befindet, wenn man das Schema von links nach rechts durchläuft. Dabei erfolgt das Umschalten auf das neue Taktschema in einem Takt.

Während des Umschaltens werden erfindungsgemäß Druckausgleichs- oder Überströmvorgänge zwischen zwei Adsorbern, soweit möglich, normal durchgeführt. Ist dies nicht möglich, da der korrespondierende Adsorber ausgefallen ist, wird das Gas über Zusatzventile adgefackelt. Zum Druckaufbau in einem Adsorber kann, wenn der korrespondierende Adsorber ausgefallen ist, Produktgas verwendet werden. Auch hierzu werden Zusatzventile benötigt.

Das erfindungsgemäße Verfahren bietet gegenüber dem bekannten Verfahren den Vorteil, daß Adsorber nur bei tatsächlich auftretenden Störungen abgeschaltet werden, daß eine Drosselung der Produktmenge nicht mehr nötig ist und das Umschalten auf ein neues Taktschema binnen kürzester Zeit in einem Takt folgt.

Die Erfindung sei nunmehr anhand einiger schematisch dargestellter Ausführungsbeispiele noch näher erläutert.

Dabei zeigen :
Figur 1   eine Anlage mit 9 Adsorbern,
Figur 2   das Taktschema für die Anlage gemäß Figur 1,
Figur 3   den zeitlichen Druckverlauf in einem Adsorber,
Figur 4   ein Rechnerprogramm,
Figur 5   ein Zeitdruckdiagramm,
Figur 6   ein Taktschema für eine Anlage mit 8 Adsorbern,
Figur 7   ein Taktschema für eine Anlage mit 7 Adsorbern,
Tabelle 1   einen Überblick über die von jedem Adsorber einer Anlage gemäß Figur 1 zu durchlaufenden Takte.

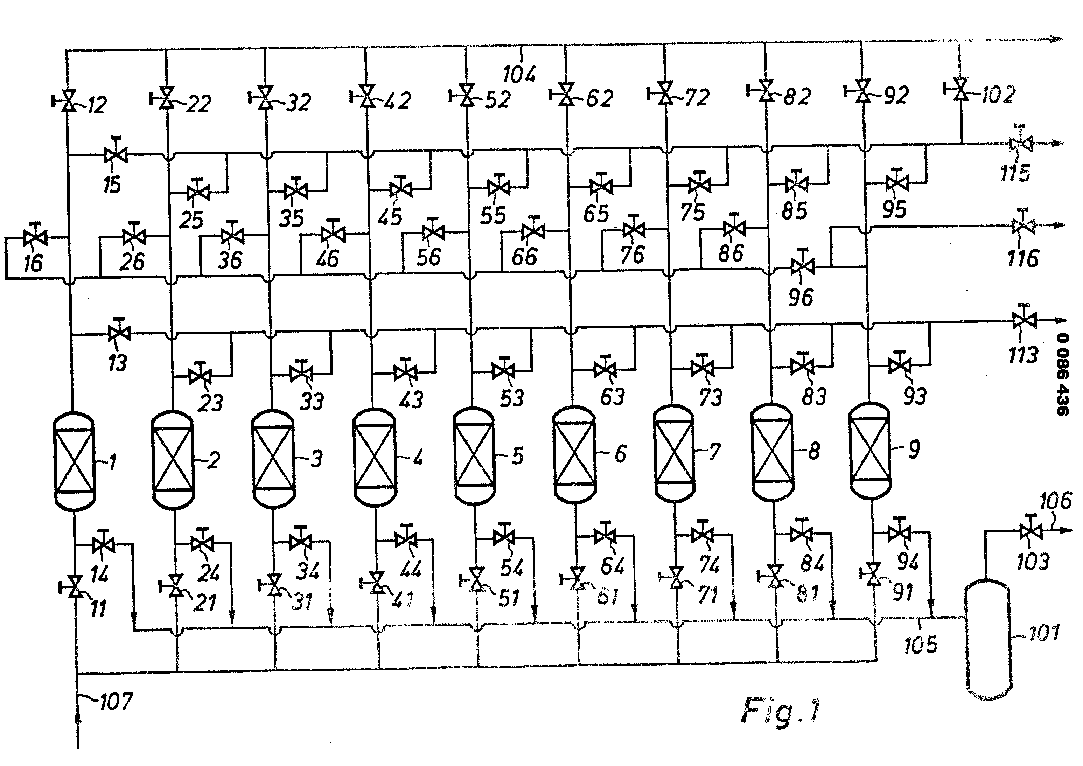

In der Anlage des Figur 1 gelangt Rohgas durch Leitung 107 und Ventil 11 in den Adsorber 1. Im Adsorber werden die leicht adsorbierbaren Komponente festgehalten, während die schwerer adsorbierbaren Komponenten die Anlage über das Ventil 12 und die Leitung 104 verlassen. Nach beendeter Adsorption wird der bisher zum Adsorber 1 geführte Teil des Rohgasstromes auf einen anderen Adsorber (im vorliegenden Fall auf den Adsorber 4) umgeschaltet und im Adsorber 1 der Druck auf einen ersten Zwischendruck gesenkt (E1). Dies geschieht durch Druckausgleich mit dem Adsorber 5 durch Öffnung der Ventile 15 und 55. Anschließend wird der Druck im Adsorber 1 auf einen zweiten Zwischendruck (E21, E22) gesenkt, und zwar durch Druckausgleich mit dem Adsorber 6 über die Ventile 16 und 66, und auf einen dritten Zwischendruck (E3) durch Druckausgleich mit dem Adsorber 7 über die Ventile 16 und 76.

Während dieser Drucksenkungen im Adsorber 1, die in Adsorptionsrichtung erfolgen, wird der Druck in den Adsorbern 5, 6 und 7 erhöht (B1, B21, B22 bzw. B3).

Danach wird der Druck im Adsorber 1 durch Öffnung der Ventile 13, 83 und 84 weiter gesenkt (E41, E42). Das Gas aus dem Adsorber 1 strömt jetzt im Gegenstrom zur Adsorptionsrichtung durch den Adsorber 8, der dabei von zuvor adsorbierten Komponenten vollständig freigespült wird (SP2) und in dem ein erster Druckaufbau (B4) erfolgt. Das sich ausbildende Gasgemisch gelangt über Leitung 105 in einen Ausgleichsbehälter 101.

Anschließend werden die Ventile 83 und 84 geschlossen und die Ventile 93 und 94 geöffnet (E43), wodurch der Adsorber 9 ebenfalls im Gegenstrom von einem Teil der zuvor adsorbierten Komponenten freigespült (SP1) wird.

Im Anschluß daran werden die Ventile 13, 93 und 94 geschlossen und das restliche, im Adsorber 1 befindliche Gas durch Öffnung des Ventils 14 als Restgas in den Behälter 101 abgelassen (E51, E52). Danach hat der Adsorber 1 keinen Überdruck mehr und steht zum Spülen bereit.

Das Spülen (SP1) wird durch eine Verbindung des Adsorbers 1 mit dem noch unter Druck stehenden Adsorber 2 über die geöffneten Ventile 23, 13 und 14 bewerkstelligt. Das Gas gelangt über Leitung 105 in den Behälter 101. Der Adsorber 2 durchläuft dabei seinen 7. Entspannungstakt (E43). Für den zweiten Spültakt (SP2) des Adsorbers 1 wird das Ventil 23 geschlossen und das Ventil 33 geöffnet, so daß der Adsorber jetzt Spülgas aus dem Adsorber 3 erhält, der seinen 5. Entspannungstakt (E41) durchläuft. Das Gas gelangt wieder in den Behälter 101.

Die sich an die Spülung anschließende Erhöhung des Druckes im Adsorber 1 wird in sieben Schritten vorgenommen. Zu diesem Zweck wird der Adsorber 1 durch Schließung des Ventils 14 und Öffnung der Ventile 46 und 16 mit dem Adsorber 4 in Druckausgleich gebracht (B3), wobei der letztere seinen 4. Entspannungstakt (E3) durchläuft. Eine weitere Drucksteigerung im Adsorber 1 (B21, B22) erfolgt durch Schließung des Ventils 46 und Öffnung des Ventils 56, wobei der Adsorber 5 entspannt wird (E21, E22). Die 5. Drucksteigerung (B1) erfolgt durch Schließung des Ventils 56 und Öffnung der Ventile 65 und 15 und damit Verbindung mit dem Adsorber 6, der dabei ebenfalls eine Entspannung erfährt (E1). Die letzte Drucksteigerung (B01, B02) auf den Adsorptionsdruck wird mit abgezweigtem Produktgas vorgenommen, indem die Ventile 102 und 15 geöffnet werden. Der Adsorber 1 steht jetzt wieder für eine erneute Adsorption zur Verfügung.

Die Ventile 113, 115 und 116 dienen im Bedarfsfall zur Abgabe von Überdruckgas.

Bei PSA-Verfahren werden also prinzipiell Verunreinigungen aus einem Rohgas bei hohem Druck adsorbiert und bei niedrigem Druck desorbiert. Das Verfahren wird zyklisch wiederholt und besteht im wesentlichen aus 6 Schritten :

i) Adsorption aller Verunreinigungen bei Adsorptionsdruck (Schritte A1, A2, A3, A4, A5, A6, A7, A8, A9).

ii) Entspannen auf den Regenerierdruck über mehrere Druckausgleichsschritte, wobei das entspannte Gas einerseits dazu dient, einen bereits regenerierten Adsorber wieder auf Druck zu bringen und andererseits einen regenerierten Adsorber zu spülen (Schritte E1, E21, E22, E3, E41, E42, E43).

iii) Letztes Entspannen auf niedrigen Druck im Gegenstrom, um den Adsorber zum Spülen vorzubereiten (Schritte E51, E52).

iv) Spülen bei niedrigem Druck mit entspanntem Gas aus einem anderen, im Druckaufbau befindlichen Adsorber (Schritte SP1, SP2).

v) Bespannen mit Hilfe von Entspannungsgas aus den anderen Adsorbern (Schritte B4, B3, B21, B22, B1).

vi) Bespannen mit Hilfe von Produktgas (Schritte B01, B02).

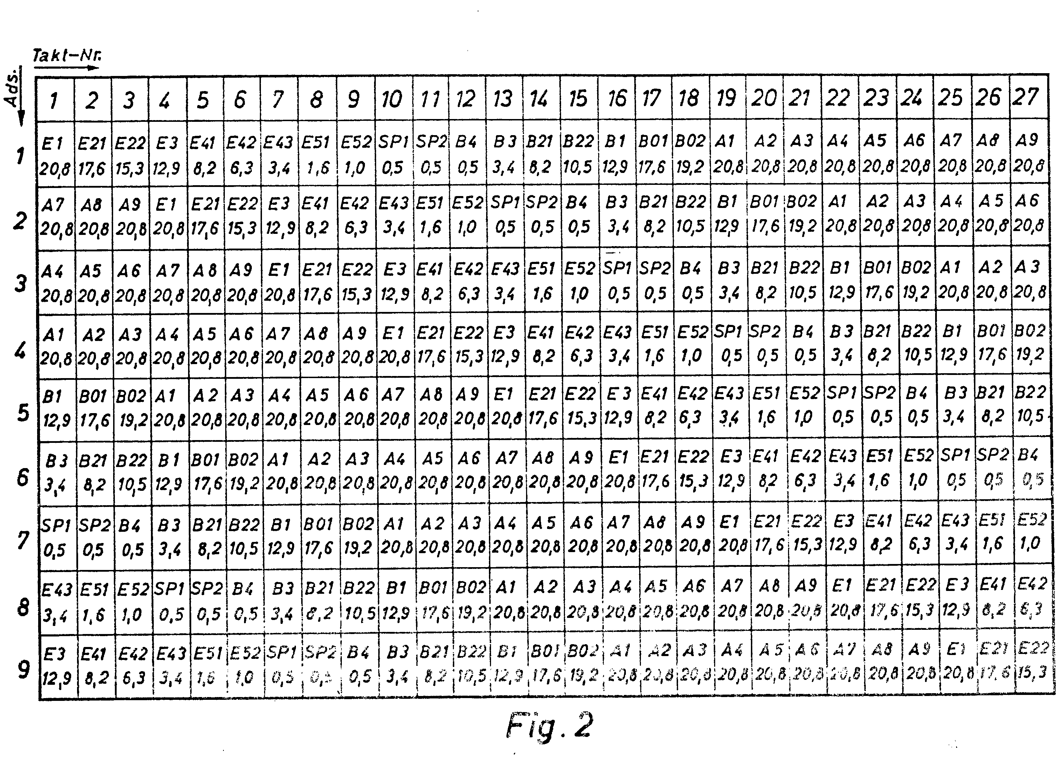

Im Schema der Figur 2 sind untereinander die Adsorber in der Numerierung der Figur 1 aufgetragen, wobei in der obersten Zeile die Taktnummern und bei jedem Takt die Taktbezeichnungen angegeben sind, die sich aus Tabelle 1 ergeben. Aus dem Schema der Figur 2 ist ersichtlich, daß bei der in Figur 1 dargestellten Anlage stets 3 Adsorber gleichzeitig, jedoch zeitlich etwas gegeneinander verschoben auf Adsorption geschaltet sind. Bei jedem Adsorptionstakt gelangt also in jeden Adsorber nur 1/3 der Rohgasmenge.

Das Taktschema, das bei der in Figur 1 gezeigten Anlage ein jeder Adsorber zu durchlaufen hat, wurde lediglich am Beispiel des Adsorbers 1 geschildert. Es liegt für den Fachmann auf der Hand, daß die Taktschemata der übrigen Adsorber 2 bis 9, wie auch im übrigen zweifelsfrei aus dem Schema der Figur 2 hervorgeht, dem Taktschema des Adsorbers 1 in allen Punkten entsprechen und lediglich zeitlich gegen diesen verschoben sind, so daß die Anlage insgesamt einen kontinuierlich fließenden Produktgasstrom liefert.

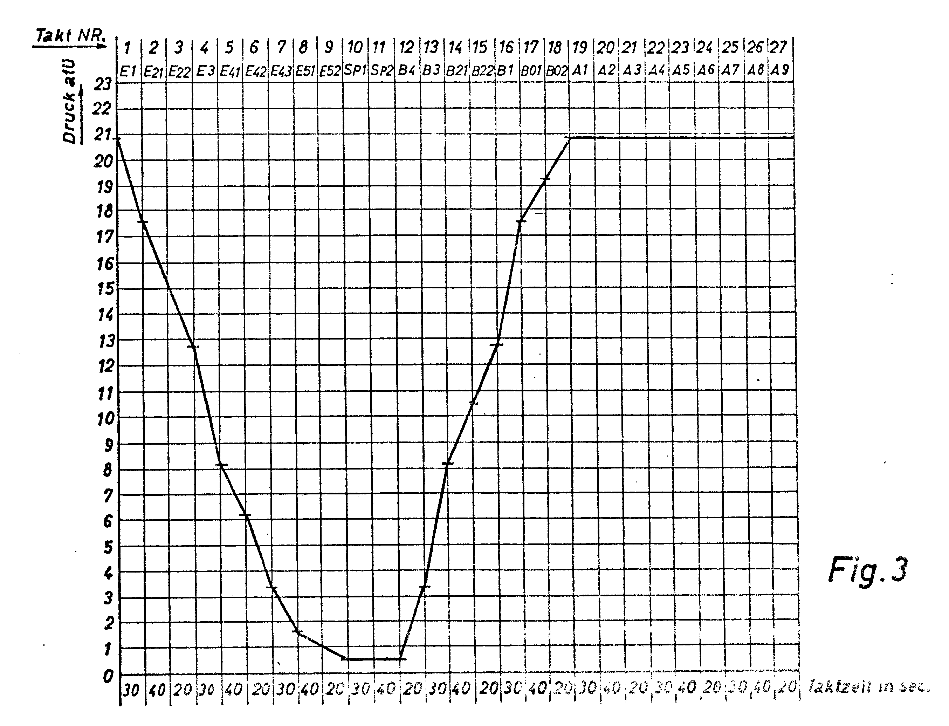

In Figur 3 ist in einem Diagramm der zeitliche Druckverlauf in einem Adsorber während eines Adsorptionszyklus dargestellt. Auf der Ordinate ist der Adsorberdruck in atü gegen die Taktzeit in Sekunden als Abszisse aufgetragen. Dabei wird von einem beispielhaften Adsorptionsdruck von 20,8 atü und einem Spüldruck von 0,5 atü ausgegangen. Auch aus diesem Diagramm ist deutlich die Zuordnung der einzelnen Ent- und Bespannungstakte erkennbar (beispielsweise E3-B3 oder E42-B4), die sich durch, absolut gesehen, gleiche Druckänderung auszeichnen.

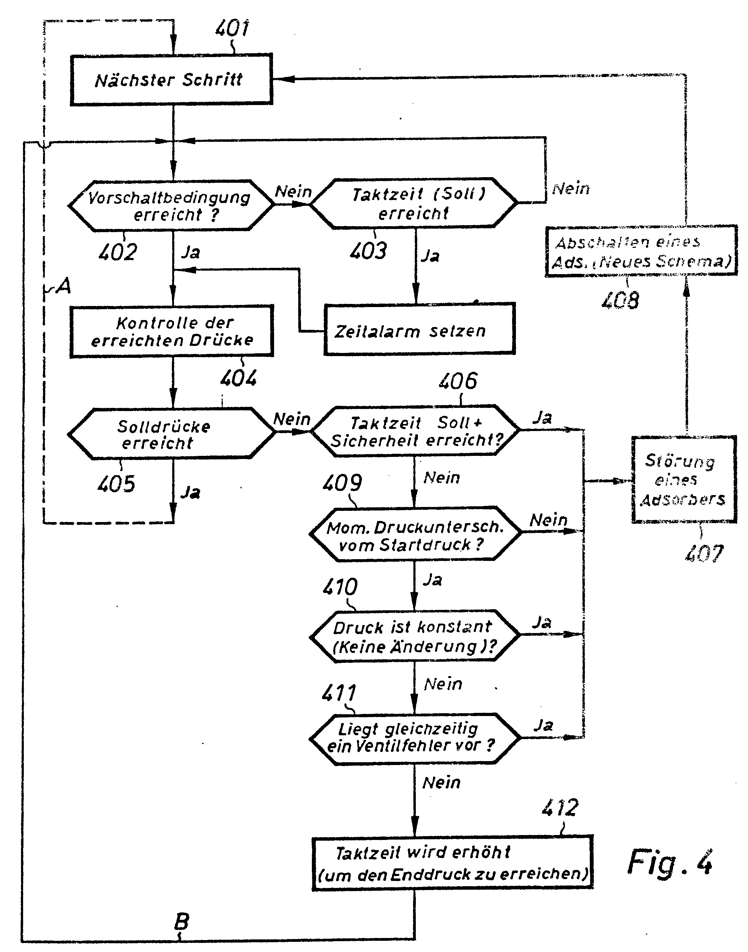

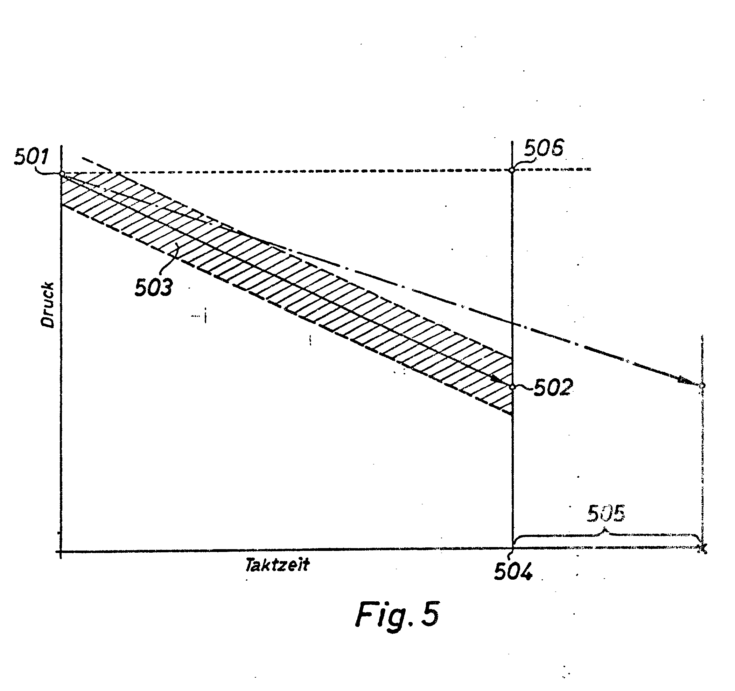

Anhand des in Figur 4 dargestellten Flußdiagramms und des in Figur 5 dargestellten Zeit/Druck-Diagramms sei nunmehr die Steuerstrategie für die Adsorberanlage erklärt. Im Flußdiagramm (Rechnerprogramm) stellen die Rechtecke Funktionen dar, die angespitzten Rechtecke Weichen (konditionale Entscheidungen). 401 stellt immer die Einleitung eines nächsten Schaltschrittes dar, wobei vor Einleitung bestimmte Abfragen erfolgen, von deren Ergebnis die Vorschaltung auf den nächsten Verfahrensschritt bzw. Takt abhängt.

Die erste Abfrage 402 bezieht sich darauf, ob die Vorschaltbedingung für den jeweiligen Adsorber erreicht ist. Als Vorschaltbedingung kann dabei der Enddruck in einem Adsorber oder in einer Leitung, die Zeit bis zur Einstellung eines bestimmten Druckes, die Zeit bis zum Auftreten einer bestimmten Ventilstellung oder die Ventilstellung nach Ablauf einer bestimmten Zeit angesehen werden. Im folgenden sei als Vorschaltbedingung bei 402 beispielsweise der Enddruck in einem Adsorber gewählt. Im Diagramm der Figur 5 (Abszisse : Taktzeit ; Ordinate : Druck) ist mit 501 der Startdruck eines Adsorbers nach Beendigung der Adsorption gekennzeichnet, der bis auf einen End- oder Solldruck 502 abgebaut werden soll (durchgezogener Pfeil). Dabei ist eine erlaubte Druckabweichung 503 (schraffierter Bereich innerhalb der gestrichelten Linien) möglich. Ist der Enddruck noch nicht erreicht, dann wird abgefragt 403, ob die Taktzeit ihren Endwert (504 in Figur 5) erreicht hat. Wenn das nicht der Fall ist, wird wieder abgefragt, ob der Solldruck erreicht ist. Ist der Sollwert 504 der Taktzeit erreicht, dann wird ein Zeitalarm gesetzt und der erreichte Druck kontrolliert 404. Ergibt sich dabei 405, daß der Solldruck erreicht ist bzw. innerhalb der erlaubten Druckabweichung 503 liegt, dann wird über A der nächste Schaltschritt bzw. Takt 401 eingeleitet.

Ist der Solldruck nicht erreicht, dann wird abgefragt 406, ob die Taktzeit Soll + Sicherheit erreicht ist. Als Sicherheit wird dabei eine erlaubte Zeitabweichung (505 in Figur 5) von etwa 10 % der Taktzeit betrachtet. Ist die Soll- + Sicherheitszeit abgelaufen (strichpunktierter Pfeil in Figur 5) und der Enddruck noch nicht erreicht, dann indiziert dies die Störung 407 eines Adsorbers und führt bei erfindungsgemäßer nochmaliger Wiederholung dieses Abfrageweges bei gleichem Ergebnis zum Abschalten 408 eines Adsorbers. Diese zweimalige Wiederholung ist ein erfindungswesentliches Merkmal, da bei nur einmaliger Abfrage oft Abschaltungen erfolgen, die nicht nötig sind.

Ergibt die Abfrage 406 ein negatives Ergebnis (d. h. die Soll- + Sicherheitszeit ist noch nicht erreicht), dann erfolgt eine weitere Abfrage 409, die über den Unterschied zwischen dem momentanen Druck und dem Startdruck in einem Adsorber Auskunft gibt. Ist der Druck der gleiche wie der Startdruck (punktierte Linie 501 bis 506 in Figur 5), dann wird wieder die Störung 407 eines Adsorbers angezeigt. Ist ein Druckunterschied vorhanden, wird abgefragt 410, ob der Druck zur Zeit konstant bleibt. Ist das der Fall, dann ist der Adsorber gestört 407.

Wenn der Druck nicht konstant bleibt, wird abgefragt 411, ob gleichzeitig ein Ventilfehler vorliegt. Liegt ein Ventilfehler vor, dann ist der Adsorber gestört 407. Liegt kein Ventilfehler vor, dann wird die Taktzeit erhöht 412, um den Enddruck zu erreichen. Wird der Enddruck innerhalb der erhöhten Taktzeit erreicht, dann erfolgt auf dem Wege B wieder Abfrage 402, Kontrolle 404 und Abfrage 405 und, wenn alle Abfragen positiv ausfallen, über A401 Einleitung des nächsten Schaltschrittes.

Ist nunmehr anhand des vorbeschriebenen Verfahrens ein Adsorber als defekt ermittelt, dann wird dieser durch Schließung aller ihm zugeordneter Ventile und gegebenenfalls Handventile abgeblockt. Die Adsorberanlage muß nunmehr mit den verbleibenden Adsorbern weiter betrieben werden. Die Umschaltung von beispielsweise 9 auf verbleibende 8 Adsorber erfolgt dabei in einem einzigen Takt ohne zwischengeschalteten Synchronisationsschritt. Durch diese Maßnahme ergibt sich der Vorteil, daß keine Drosselung der Produktmenge notwendig ist.

Das erfindungsgemäße Umschalten auf eine geringere Anzahl von Adsorbern sei nunmehr anhand einiger Beispiele erläutert.

## Beispiel 1

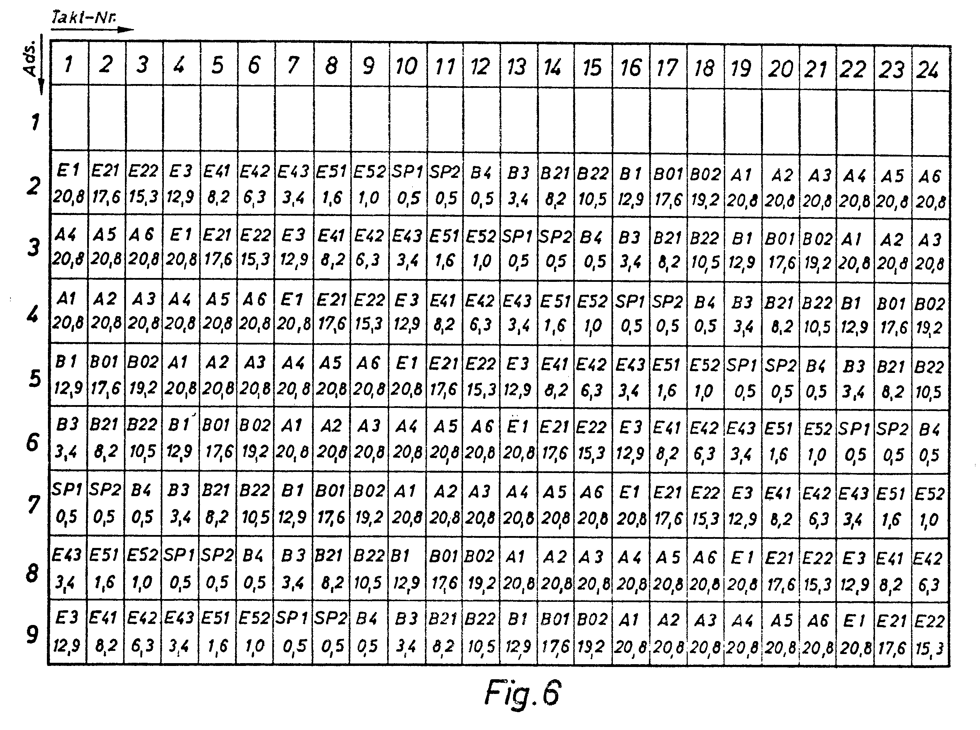

Bei einer Druckwechsel-Adsorptionsanlage mit neun Adsorbern, wie sie beispielsweise in Figur 1 dargestellt ist, wobei die Adsorber eine Taktfolge gemäß Figur 2 haben, sei im Takt 4 des Adsorbers 1 ein Defekt aufgetreten und der Adsorber abgeblockt worden. Somit muß die Anlage an ein neues Taktschema mit nur 8 Adsorbern angepaßt werden, das in Figur 6 dargestellt ist. Wie aus der Figur 6 hervorgeht, sind nur noch zwei Adsorber in Adsorption, wobei gleichzeitig die Anzahl der Adsorptionstakte von 9 auf 6 reduziert ist.

## Beispiel 2

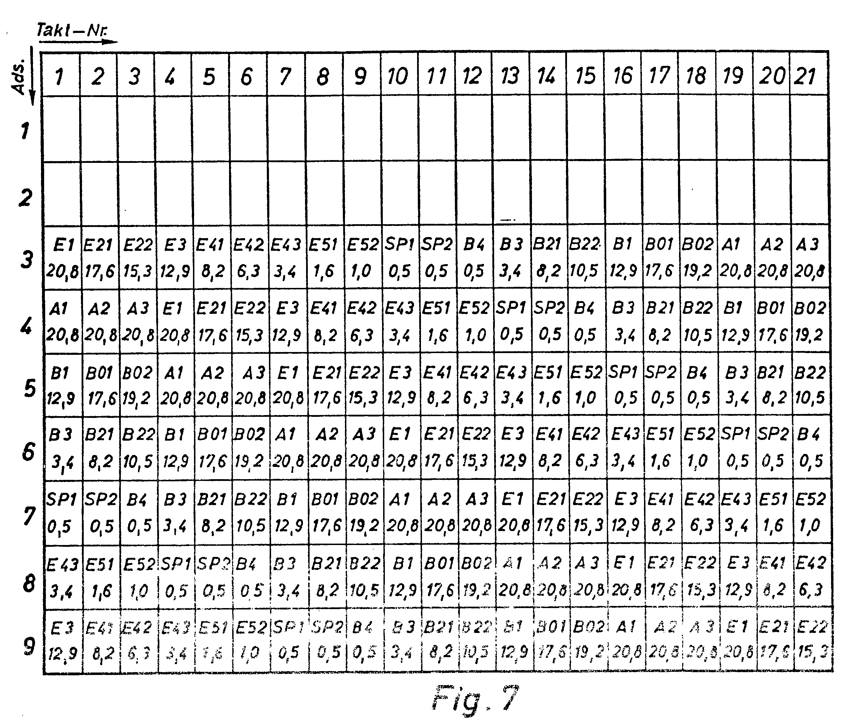

Es sei angenommen, daß in der Anlage des Beispiels 1 wiederum ein Defekt auftritt, der dazu zwingt, den dort mit « 2 » bezeichneten Adsorber abzublocken. Die Anlage wird dann mit 7 Adsorbern weitergefahren entsprechend einem Taktschema, wie es in Figur 7 gezeigt ist. Die Anzahl der Adsorptionstakte ist nunmehr auf 3 reduziert.

Tabelle

| Taktnr. | Taktbe-zeichng. | Funktion | Taktbe-zeichng. | korresp. Funktion | Takt-zeit |
|---|---|---|---|---|---|
| 1 | E1 | 1. Entspannung | B1 | 5. Druckaufbau | 30 |
| 2 | E21 | 2. Entspannung | B21 | 3. Druckaufbau | 40 |
| 3 | E22 | 3. Entspannung | B22 | 4. Druckaufbau | 20 |
| 4 | E3 | 4. Entspannung | B3 | 2. Druckaufbau | 30 |
| 5 | E41 | 5. Entspannung | SP2 | 2. Regenerierung | 40 |
| 6 | E42 | 6. Entspannung | B4 | 1. Druckaufbau | 20 |
| 7 | E43 | 7. Entspannung | SP1 | 1. Regenerierung | 30 |
| 8 | E51 | 1. Spülung | | | 40 |
| 9 | E52 | 2. Spülung | | | 20 |
| 10 | SP1 | 1. Regenerierung | E43 | 7. Entspannung | 30 |
| 11 | SP2 | 2. Regenerierung | E41 | 5. Entspannung | 40 |
| 12 | B4 | 1. Druckaufbau | E42 | 6. Entspannung | 20 |
| 13 | B3 | 2. Druckaufbau | E3 | 4. Entspannung | 30 |
| 14 | B21 | 3. Druckaufbau | E21 | 2. Entspannung | 40 |
| 15 | B22 | 4. Druckaufbau | E22 | 3. Entspannung | 20 |
| 16 | B1 | 5. Druckaufbau | E1 | 1. Entspannung | 30 |
| 17 | B01 | 6. Druckaufbau m. Produktgas | | | 40 |
| 18 | B02 | 7. Druckaufbau m. Produktgas | | | 20 |
| 19 | A1 | 1. Adsorption | | | 30 |
| 20 | A2 | 2. Adsorption | | | 40 |
| 21 | A3 | 3. Adsorption | | | 20 |
| 22 | A4 | 4. Adsorption | | | 30 |
| 23 | A5 | 5. Adsorption | | | 40 |
| 24 | A6 | 6. Adsorption | | | 20 |
| 25 | A7 | 7. Adsorption | | | 30 |
| 26 | A8 | 8. Adsorption | | | 40 |
| 27 | A9 | 9. Adsorption | | | 20 |

## Ansprüche

1. Verfahren zum Betrieb einer zyklisch arbeitenden Druckwechsel-Adsorptionsanlage zur Reinigung und Zerlegung von Gasen mit mehreren Adsorbern, von denen jeder innerhalb eines Zyklus eine vorher festgelegte Anzahl von Adsorptions-, Entspannungs- bzw. Druckausgleichs-, Spül- und Wiederaufdrücktakten durchläuft, wobei für die Adsorber, die Rohrleitungen und/oder die Ventile der Druckwechsel-Adsorptionsanlage meßbare physikalische Größen ausgewählt und laufend gemessen werden und wobei das Auftreten von Differenzen zwischen Ist- und Sollwerten dieser Größen als Indiz für einen Defekt in der Adsorptionsanlage gewertet und die Adsorptionsanlage nach Abblockung der als defekt ermittelten Apparateteile mit einer verminderten Anzahl von Adsorbern weiter betrieben wird, dadurch gekennzeichnet, daß beim Auftreten einer Differenz zwischen Soll- und Istwerten einer dieser Größen das Auftreten einer Differenz zwischen Soll- und Istwerten mindestens einer anderen, dem gleichen Anlagenteil zugeordneten Größe abgewartet wird und daß dann erst die dadurch als defekt ermittelten Apparateteile abgeblockt werden und die Adsorptionsanlage mit einer verminderten Anzahl von Adsorbern weiterbetrieben wird.

2. Verfahren nach Anspruch 1, dadurch gekennzeichnet, daß als physikalische Größe der Druck in den Adsorbern oder Leitungen gewählt wird.

3. Verfahren nach den Ansprüchen 1 oder 2, dadurch gekennzeichnet, daß als physikalische Größe die Zeit bis zur Einstellung eines bestimmten Druckes gewählt wird.

4. Verfahren nach einem der Ansprüche 1 bis 3, dadurch gekennzeichnet, daß als physikalische Größe die Zeit bis zum Auftreten einer bestimmten Ventilstellung oder die Ventilstellung nach Ablauf einer bestimmten Zeit gewählt wird.

5. Verfahren nach einem der Ansprüche 1 bis 4, dadurch gekennzeichnet, daß die bei der Weiterschaltung auf den nächsten Takt nach dem Abblocken verbleibenden Adsorber, soweit sie sich nicht schon auf einem geeigneten Druckniveau befinden, durch Überspringen mehrerer Takte ein einem Takt auf geeignete niedrigere oder höhere Druckniveaus gebracht werden.

6. Verfahren nach Anspruch 5, dadurch gekennzeichnet, daß zu hohe Drücke in den Adsorbern durch Ablassen von Gas erniedrigt werden.

7. Verfahren nach Anspruch 5, dadurch gekennzeichnet, daß zu niedrige Drücke in den Adsorbern durch Einlassen von Produktgas erhöht werden.

8. Verfahren nach einem der Ansprüche 1 bis 7, dadurch gekennzeichnet, daß beim Abblocken eines Adsorbers die danach von den verbleibenden Adsorbern zu durchlaufenden Takte in ihrer Funktion so verschoben werden, daß die ursprüngliche Reihenfolge der Funktionen innerhalb jedes Taktes unter Wegfall einer der Anzahl der abgeschalteten Adsorbern entsprechenden Anzahl von Adsorptionstakten wieder hergestellt wird, wobei der oder die jeweils bereits seit längerem in Adsorption befindlichen Adsorber den oder die jeweils bei den relativ höheren Drücken stattfindenden Entspannungstakte übernehmen und der oder die jeweils erst seit kürzerem in Adsorption befindlichen Adsorber in Adsorption verbleiben.

9. Verfahren nach einem der Ansprüche 1 bis 8, dadurch gekennzeichnet, daß der Vergleich der Soll- und der Istwerte durch einen Prozeßrechne erfolgt, der außerdem die Änderung der Funktion der einzelnen verbleibenden Adsorber während eines einzigen Taktes besorgt.

## Claims

1. A method of operating a cyclically-operating pressure-swing adsorption system for cleaning and separating gases, comprising a plurality of adsorbers each of which, within a cycle, passes through a predetermined number of adsorption, expansion or pressure compensation, flushing and repressurisation phases, wherein for the adsorbers, the pipelines and/or the valves of the pressure-swing adsorption system, measurable physical quantities are selected and continuously measured, and wherein the occurrence of differences between measured values and theoretical values of these quantities are evaluated as an indication of a defect in the adsorption system, and after the blocking-off of the apparatus components which have been established as being defective, the adsorption system is further operated with a reduced number of adsorbers, characterised in that, on the occurrence of a difference between the theoretical and measured values of one of these quantities, the occurrence of a difference between the theoretical and measured values of at least one other quantity assigned to the same part of the system is awaited, and that only then are the apparatus components which have been established as being defective blocked-off and the adsorption system further operated with a reduced number of adsorbers.

2. A method as claimed in Claim 1, characterised in that, as physical, the pressure in the adsorbers or pipelines is chosen.

3. A method as claimed in Claim 1 or Claim 2, characterised in that, as physical quantity, the time up to the setting of a specific pressure is chosen.

4. A method as claimed in one of Claims 1 to 3, characterised in that, as the physical quantity, the time to the occurrence of a specific valve setting, or the valve setting following the elapse of a specific time is chosen.

5. A method as claimed in one of Claims 1 to 4, characterised in that where they are not already at a suitable pressure level, the remaining adsorbers at the time of step-on to the next phase following the blocking-off step, are brought to suitable lower or higher pressure levels in a specific phase by jumping over several phases.

6. A method as claimed in Claim 5, characterised in that excessively high pressures in the adsorbers are reduced by blowing off gas.

7. A method as claimed in Claim 5, characterised in that excessively low pressure in the adsorbers are increased by introducing product gas.

8. A method as claimed in one of Claims 1 to 7, characterised in that on the blocking-off of an adsorber, the phases through which the remaining adsorbers are subsequently to pass are displaced in their function in such a way that the original sequence of the functions within each phase is reestablished with the omission of a number of adsorption phases which corresponds to the number of disconnected adsorbers, the adsorber of adsorbers which have already been engaged in adsorption for some time taking over the expansion phase or phases which take place at relatively higher pressures, and the adsorber or adsorbers which have been engaged in adsorption for only a short length of time remain in the adsorption phase.

9. A method as claimed in one of Claims 1 to 8, characterised in that the theoretical and measured values are compared by means of a process computer which also takes care of a change in the function of the individual remaining adsorbers during a single phase.

7

**Revendications**

1. Procédé pour la conduite d'une installation d'adsorption à alternance de pression fonctionnant cycliquement, pour l'épuration et la séparation de gaz avec plusieurs adsorbeurs, qui exécutent chacun, pendant un cycle, un nombre prédéterminé d'opérations d'adsorption, de détente ou d'équilibrage de pression, de balayage et de remontée en pression, des grandeurs physiques mesurables étant sélectionnées et mesurées de façon continue pour les adsorbeurs, les conduits et/ou les vannes, l'apparition de différences entre les valeurs réelles et de consigne desdites grandeurs étant analysées pour indiquer un défaut dans l'installation d'adsorption et l'installation d'adsorption continuant à fonctionner, après un arrêt des parties d'appareillage déterminées comme défectueuses, avec un nombre réduit d'adsorbeurs, caractérisé en ce que, lorsqu'il apparaît une différence entre valeur de consigne et valeur réelle d'une de ces grandeurs, l'apparition d'une différence entre valeur de consigne et valeur réelle d'au moins une autre grandeur associée à la même partie de l'installation est attendue et en ce que seulement ensuite les parties d'appareillage définies comme défectueuses sont arrêtées et l'installation d'adsorption continue à fonctionner avec un nombre réduit d'adsorbeurs.

2. Procédé selon la revendication 1, caractérisé en ce que, comme grandeur physique, on choisit la pression dans les adsorbeurs ou les conduits.

3. Procédé selon les revendications 1 ou 2, caractérisé en ce que, comme grandeur physique, on choisit le temps s'écoulant jusqu'à l'établissement d'une pression déterminée.

4. Procédé selon une des revendications 1 à 3, caractérisé en ce que, comme grandeur physique, on choisit le temps s'écoulant jusqu'à l'établissement d'une position déterminée de vannes ou bien la position de vannes après écoulement d'un temps déterminé.

5. Procédé selon une des revendications 1 à 4, caractérisé en ce que les adsorbeurs continuant à fonctionner dans l'étape suivante après l'arrêt, pour autant qu'il ne se trouve pas déjà à un niveau approprié de pression, sont amenés à un niveau approprié de pression plus faible ou plus haut en une étape par franchissement de plusieurs étapes.

6. Procédé selon la revendication 5, caractérisé en ce que des pressions trop élevées dans les adsorbeurs sont abaissées par décharge de gaz.

7. Procédé selon la revendication 5, caractérisé en ce que des pressions trop faibles dans les adsorbeurs sont augmentées par introduction de gaz effluent.

8. Procédé selon une des revendications 1 à 7, caractérisé en ce que, lors de l'arrêt d'un adsorbeur, les étapes à effectuer ensuite par les adsorbeurs restants sont décalés dans leurs fonctions de manière que la séquence initiale de fonctions à l'intérieur de chaque étape soit rétablie en supprimant un nombre d'étapes d'adsorption correspondant au nombre des adsorbeurs arrêtés, le ou les adsorbeurs se trouvant déjà depuis longtemps en condition d'adsorption passant dans les étapes de détente se produisant respectivement aux pressions relativement supérieures tandis que le ou les adsorbeurs se trouvant respectivement en adsorption depuis un temps assez court restent en adsorption.

9. Procédé selon une des revendications 1 à 8, caractérisé en ce que la comparaison des valeurs de consigne et des valeurs réelles est effectuée par un calculateur qui assure en outre la modification de la fonction des différents adsorbeurs restant pendant une seule étape.

Fig.1

0 086 436

Takt-Nr.

Ads.

| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 |
|---|---|---|---|---|---|---|---|---|---|---|---|---|---|---|---|---|---|---|---|---|---|---|---|---|---|---|---|
| 1 | E1 20,8 | E21 17,6 | E22 15,3 | E3 12,9 | E41 8,2 | E42 6,3 | E43 3,4 | E51 1,6 | E52 1,0 | SP1 0,5 | SP2 0,5 | B4 0,5 | B3 3,4 | B21 8,2 | B22 10,5 | B1 12,9 | B01 17,6 | B02 19,2 | A1 20,8 | A2 20,8 | A3 20,8 | A4 20,8 | A5 20,8 | A6 20,8 | A7 20,8 | A8 20,8 | A9 20,8 |
| 2 | A7 20,8 | A8 20,8 | A9 20,8 | E1 20,8 | E21 17,6 | E22 15,3 | E3 12,9 | E41 8,2 | E42 6,3 | E43 3,4 | E51 1,6 | E52 1,0 | SP1 0,5 | SP2 0,5 | B4 0,5 | B3 3,4 | B21 8,2 | B22 10,5 | B1 12,9 | B01 17,6 | B02 19,2 | A1 20,8 | A2 20,8 | A3 20,8 | A4 20,8 | A5 20,8 | A6 20,8 |
| 3 | A4 20,8 | A5 20,8 | A6 20,8 | A7 20,8 | A8 20,8 | A9 20,8 | E1 20,8 | E21 17,6 | E22 15,3 | E3 12,9 | E41 8,2 | E42 6,3 | E43 3,4 | E51 1,6 | E52 1,0 | SP1 0,5 | SP2 0,5 | B4 0,5 | B3 3,4 | B21 8,2 | B22 10,5 | B1 12,9 | B01 17,6 | B02 19,2 | A1 20,8 | A2 20,8 | A3 20,8 |
| 4 | A1 20,8 | A2 20,8 | A3 20,8 | A4 20,8 | A5 20,8 | A6 20,8 | A7 20,8 | A8 20,8 | A9 20,8 | E1 20,8 | E21 17,6 | E22 15,3 | E3 12,9 | E41 8,2 | E42 6,3 | E43 3,4 | E51 1,6 | E52 1,0 | SP1 0,5 | SP2 0,5 | B4 0,5 | B3 3,4 | B21 8,2 | B22 10,5 | B1 12,9 | B01 17,6 | B02 19,2 |
| 5 | B1 12,9 | B01 17,6 | B02 19,2 | A1 20,8 | A2 20,8 | A3 20,8 | A4 20,8 | A5 20,8 | A6 20,8 | A7 20,8 | A8 20,8 | A9 20,8 | E1 20,8 | E21 17,6 | E22 15,3 | E3 12,9 | E41 8,2 | E42 6,3 | E43 3,4 | E51 1,6 | E52 1,0 | SP1 0,5 | SP2 0,5 | B4 0,5 | B3 3,4 | B21 8,2 | B22 10,5 |
| 6 | B3 3,4 | B21 8,2 | B22 10,5 | B1 12,9 | B01 17,6 | B02 19,2 | A1 20,8 | A2 20,8 | A3 20,8 | A4 20,8 | A5 20,8 | A6 20,8 | A7 20,8 | A8 20,8 | A9 20,8 | E1 20,8 | E21 17,6 | E22 15,3 | E3 12,9 | E41 8,2 | E42 6,3 | E43 3,4 | E51 1,6 | E52 1,0 | SP1 0,5 | SP2 0,5 | B4 0,5 |
| 7 | SP1 0,5 | SP2 0,5 | B4 0,5 | B3 3,4 | B21 8,2 | B22 10,5 | B1 12,9 | B01 17,6 | B02 19,2 | A1 20,8 | A2 20,8 | A3 20,8 | A4 20,8 | A5 20,8 | A6 20,8 | A7 20,8 | A8 20,8 | A9 20,8 | E1 20,8 | E21 17,6 | E22 15,3 | E3 12,9 | E41 8,2 | E42 6,3 | E43 3,4 | E51 1,6 | E52 1,0 |
| 8 | E43 3,4 | E51 1,6 | E52 1,0 | SP1 0,5 | SP2 0,5 | B4 0,5 | B3 3,4 | B21 8,2 | B22 10,5 | B1 12,9 | B01 17,6 | B02 19,2 | A1 20,8 | A2 20,8 | A3 20,8 | A4 20,8 | A5 20,8 | A6 20,8 | A7 20,8 | A8 20,8 | A9 20,8 | E1 20,8 | E21 17,6 | E22 15,3 | E3 12,9 | E41 8,2 | E42 6,3 |
| 9 | E3 12,9 | E41 8,2 | E42 6,3 | E43 3,4 | E51 1,6 | E52 1,0 | SP1 0,5 | SP2 0,5 | B4 0,5 | B3 3,4 | B21 8,2 | B22 10,5 | B1 12,9 | B01 17,6 | B02 19,2 | A1 20,8 | A2 20,8 | A3 20,8 | A4 20,8 | A5 20,8 | A6 20,8 | A7 20,8 | A8 20,8 | A9 20,8 | E1 20,8 | E21 17,6 | E22 15,3 |

Fig. 2

0 086 436

Fig.3

0 086 436

**401** Nächster Schritt

**402** Vorschaltbedingung erreicht ? — Nein → **403** Taktzeit (Soll) erreicht

**404** Kontrolle der erreichten Drücke

Zeitalarm setzen

**405** Solldrücke erreicht — Nein → **406** Taktzeit Soll + Sicherheit erreicht?

**408** Abschalten eines Ads. (Neues Schema)

**407** Störung eines Adsorbers

**409** Mom. Druckuntersch. vom Startdruck ?

**410** Druck ist konstant (Keine Änderung)?

**411** Liegt gleichzeitig ein Ventilfehler vor ?

**412** Taktzeit wird erhöht (um den Enddruck zu erreichen)

Fig. 4

A

B

*Fig. 5*

Takt-Nr.

Ads.

| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
|---|---|---|---|---|---|---|---|---|---|----|----|----|----|----|----|----|----|----|----|----|----|----|----|----|
| 1 | | | | | | | | | | | | | | | | | | | | | | | | |
| 2 | E1 20,8 | E21 17,6 | E22 15,3 | E3 12,9 | E41 8,2 | E42 6,3 | E43 3,4 | E51 1,6 | E52 1,0 | SP1 0,5 | SP2 0,5 | B4 0,5 | B3 3,4 | B21 8,2 | B22 10,5 | B1 12,9 | B01 17,6 | B02 19,2 | A1 20,8 | A2 20,8 | A3 20,8 | A4 20,8 | A5 20,8 | A6 20,8 |
| 3 | A4 20,8 | A5 20,8 | A6 20,8 | E1 20,8 | E21 17,6 | E22 15,3 | E3 12,9 | E41 8,2 | E42 6,3 | E43 3,4 | E51 1,6 | E52 1,0 | SP1 0,5 | SP2 0,5 | B4 0,5 | B3 3,4 | B21 8,2 | B22 10,5 | B1 12,9 | B01 17,6 | B02 19,2 | A1 20,8 | A2 20,8 | A3 20,8 |
| 4 | A1 20,8 | A2 20,8 | A3 20,8 | A4 20,8 | A5 20,8 | A6 20,8 | E1 20,8 | E21 17,6 | E22 15,3 | E3 12,9 | E41 8,2 | E42 6,3 | E43 3,4 | E51 1,6 | E52 1,0 | SP1 0,5 | SP2 0,5 | B4 0,5 | B3 3,4 | B21 8,2 | B22 10,5 | B1 12,9 | B01 17,6 | B02 19,2 |
| 5 | B1 12,9 | B01 17,6 | B02 19,2 | A1 20,8 | A2 20,8 | A3 20,8 | A4 20,8 | A5 20,8 | A6 20,8 | E1 20,8 | E21 17,6 | E22 15,3 | E3 12,9 | E41 8,2 | E42 6,3 | E43 3,4 | E51 1,6 | E52 1,0 | SP1 0,5 | SP2 0,5 | B4 0,5 | B3 3,4 | B21 8,2 | B22 10,5 |
| 6 | B3 3,4 | B21 8,2 | B22 10,5 | B1 12,9 | B01 17,6 | B02 19,2 | A1 20,8 | A2 20,8 | A3 20,8 | A4 20,8 | A5 20,8 | A6 20,8 | E1 20,8 | E21 17,6 | E22 15,3 | E3 12,9 | E41 8,2 | E42 6,3 | E43 3,4 | E51 1,6 | E52 1,0 | SP1 0,5 | SP2 0,5 | B4 0,5 |
| 7 | SP1 0,5 | SP2 0,5 | B4 0,5 | B3 3,4 | B21 8,2 | B22 10,5 | B1 12,9 | B01 17,6 | B02 19,2 | A1 20,8 | A2 20,8 | A3 20,8 | A4 20,8 | A5 20,8 | A6 20,8 | E1 20,8 | E21 17,6 | E22 15,3 | E3 12,9 | E41 8,2 | E42 6,3 | E43 3,4 | E51 1,6 | E52 1,0 |
| 8 | E43 3,4 | E51 1,6 | E52 1,0 | SP1 0,5 | SP2 0,5 | B4 0,5 | B3 3,4 | B21 8,2 | B22 10,5 | B1 12,9 | B01 17,6 | B02 19,2 | A1 20,8 | A2 20,8 | A3 20,8 | A4 20,8 | A5 20,8 | A6 20,8 | E1 20,8 | E21 17,6 | E22 15,3 | E3 12,9 | E41 8,2 | E42 6,3 |
| 9 | E3 12,9 | E41 8,2 | E42 6,3 | E43 3,4 | E51 1,6 | E52 1,0 | SP1 0,5 | SP2 0,5 | B4 0,5 | B3 3,4 | B21 8,2 | B22 10,5 | B1 12,9 | B01 17,6 | B02 19,2 | A1 20,8 | A2 20,8 | A3 20,8 | A4 20,8 | A5 20,8 | A6 20,8 | E1 20,8 | E21 17,6 | E22 15,3 |

Fig. 6

0 086 436

Takt—Nr.

Ads.

| Ads. \ Takt-Nr. | 1 | 2 | 3 | 4 | 5 | 6 | 7 | 8 | 9 | 10 | 11 | 12 | 13 | 14 | 15 | 16 | 17 | 18 | 19 | 20 | 21 |
|---|---|---|---|---|---|---|---|---|---|---|---|---|---|---|---|---|---|---|---|---|---|
| 1 | | | | | | | | | | | | | | | | | | | | | |
| 2 | | | | | | | | | | | | | | | | | | | | | |
| 3 | E1 20,8 | E21 17,6 | E22 15,3 | E3 12,9 | E41 8,2 | E42 6,3 | E43 3,4 | E51 1,6 | E52 1,0 | SP1 0,5 | SP2 0,5 | B4 0,5 | B3 3,4 | B21 8,2 | B22 10,5 | B1 12,9 | B01 17,6 | B02 19,2 | A1 20,8 | A2 20,8 | A3 20,8 |
| 4 | A1 20,8 | A2 20,8 | A3 20,8 | E1 20,8 | E21 17,6 | E22 15,3 | E3 12,9 | E41 8,2 | E42 6,3 | E43 3,4 | E51 1,6 | E52 1,0 | SP1 0,5 | SP2 0,5 | B4 0,5 | B3 3,4 | B21 8,2 | B22 10,5 | B1 12,9 | B01 17,6 | B02 19,2 |
| 5 | B1 12,9 | B01 17,6 | B02 19,2 | A1 20,8 | A2 20,8 | A3 20,8 | E1 20,8 | E21 17,6 | E22 15,3 | E3 12,9 | E41 8,2 | E42 6,3 | E43 3,4 | E51 1,6 | E52 1,0 | SP1 0,5 | SP2 0,5 | B4 0,5 | B3 3,4 | B21 8,2 | B22 10,5 |
| 6 | B3 3,4 | B21 8,2 | B22 10,5 | B1 12,9 | B01 17,6 | B02 19,2 | A1 20,8 | A2 20,8 | A3 20,8 | E1 20,8 | E21 17,6 | E22 15,3 | E3 12,9 | E41 8,2 | E42 6,3 | E43 3,4 | E51 1,6 | E52 1,0 | SP1 0,5 | SP2 0,5 | B4 0,5 |
| 7 | SP1 0,5 | SP2 0,5 | B4 0,5 | B3 3,4 | B21 8,2 | B22 10,5 | B1 12,9 | B01 17,6 | B02 19,2 | A1 20,8 | A2 20,8 | A3 20,8 | E1 20,8 | E21 17,6 | E22 15,3 | E3 12,9 | E41 8,2 | E42 6,3 | E43 3,4 | E51 1,6 | E52 1,0 |
| 8 | E43 3,4 | E51 1,6 | E52 1,0 | SP1 0,5 | SP2 0,5 | B4 0,5 | B3 3,4 | B21 8,2 | B22 10,5 | B1 12,9 | B01 17,6 | B02 19,2 | A1 20,8 | A2 20,8 | A3 20,8 | E1 20,8 | E21 17,6 | E22 15,3 | E3 12,9 | E41 8,2 | E42 6,3 |
| 9 | E3 12,9 | E41 8,2 | E42 6,3 | E43 3,4 | E51 1,6 | E52 1,0 | SP1 0,5 | SP2 0,5 | B4 0,5 | B3 3,4 | B21 8,2 | B22 10,5 | B1 12,9 | B01 17,6 | B02 19,2 | A1 20,8 | A2 20,8 | A3 20,8 | E1 20,8 | E21 17,6 | E22 15,3 |

Fig. 7

0 086 436